# EUROPEAN PATENT APPLICATION

(11) **EP 3 142 116 A1**
(43) Date of publication of application: **15.03.2017**
(21) Application number: 15306410.0
(22) Date of filing: 14.09.2015
(51) Int. Cl.: G11B 27/034, G11B 27/28, H04N 5/268, H04N 5/232

(54) **METHOD AND DEVICE FOR CAPTURING A VIDEO IN A COMMUNAL ACQUISITION**

(71) Applicant: Thomson Licensing, 92130 Issy-les-Moulineaux (FR)
(72) Inventor: ALLIE, Valérie, 35576 Cesson-Sévigné Cedex (FR); MAETZ, Yves, 35576 Cesson-Sévigné Cedex (FR)
(74) Representative: Huchet, Anne

(57) **Abstract**

A method for capturing a video in a communal acquisition is presented. The method includes to generate a feedback in at least one device of a plurality of devices capturing a same scene, wherein the feedback indicates, for instance to the person being shot in the scene, that the capturing device generating the feedback is currently capturing a video satisfying at least one video editing rule. The feedback, being for instance a light on a capturing device, allows the person being shot to focus attention to that device, currently capturing a video satisfying to at least one video editing rule, resulting in a better quality video captured by that device.

## Description

### 1. TECHNICAL FIELD

In the following, a method for capturing a video, for example in a communal acquisition is disclosed. Such method is useful to enhance the quality of an edited video in the context a communal video capture. Corresponding device is also disclosed.

### 2. BACKGROUND ART

With the ubiquitous availability of a camera on smartphones, it is now common to see multiple users simultaneously acquiring a video of a same event, for example a concert or a sport event, for sharing their videos with their friends via a social network or an online platform. People, by posting and making available their captured video, contribute to create a rich material of video content of the event, for the benefit of other people. These videos are shot using different viewing angles with different cameras using various settings and even the subject of the videos can be different. This kind of material is called communal media. Using such material, one user can for example edit a final video merging sequences he captured with sequences captured by others, resulting in a better quality video. Systems and services attempting to exploit this communal material are deployed and propose automatic video editing solutions to create a video content from the various uploaded videos. However in communal video acquisition of an event involving at least one person, the resulting automatically edited video is generally disappointing, because, despite the availability of multiple video shots of the same scene, the person being shot generally does not look at the camera when the associated shots are selected by the automatic video editing tool. Some new methods are needed to improve the quality of the capture and the editing of video shots resulting from communal video acquisitions.

### 3. SUMMARY

A salient idea is to generate a feedback in at least one device of a plurality of devices capturing a same scene, wherein the feedback indicates, for instance to the person being shot in the scene, that the capturing device generating the feedback is currently capturing a video satisfying at least one video editing rule. The feedback, being for instance a light on a capturing device, allows the person being shot to focus attention to that device, currently capturing a video satisfying to at least one video editing rule, resulting in a better quality video captured by that device.

To that end a method for capturing a video from a scene in a first device among a plurality of devices simultaneously capturing the same scene is disclosed. The method, performed in the first device comprises:
- determining at least one ranking value representative of the matching of a captured video with respect to at least one video editing rule;
- generating a feedback in the first device, in case the first device is selected among the plurality of devices from a plurality of ranking values determined by at least one device of the plurality of devices.

According to a preferred embodiment, determining at least one ranking value is applied on a segment of the captured video.

According to a particularly advantageous variant, the method further comprises storing the at least one ranking value for the video segment as a metadata related to the video segment.

According to another variant, the scene comprises at least one autonomous entity, and generating a feedback comprises switching on a light on the first device, wherein the light is visible from the scene, indicating to the autonomous entity, to focus to the first device.

According to another variant, generating a feedback comprises rendering an information item on the first device towards the user of the first device, wherein the information item is one among:
- a graphical information item displayed on a screen of the first device;
- a visible light on the first device;
- an audio signal;
- a buzzer signal.

According to another variant, the first device is selected based on the at least one ranking value of the first device, and by coordinating of the first device with at least one other device of the plurality of devices.

According to another variant, coordinating of the first device with at least one other device of the plurality of devices further comprises sending the at least one ranking value of the first device.

According to another variant, coordinating of the first device with at least one other device of the plurality of devices further comprises sending at least one identifier of the at least one video editing rule of the first device.

According to another variant, coordinating of the first device with at least one other device of the plurality of devices further comprises sending a localization information of the first device.

According to another variant, the first device is selected as the single selected device within an area, in case the at least one video editing rule is satisfied by more than one device in the same area.

According to another variant, the number of selected devices is smaller than a first value.

According to another variant, the plurality of devices are configured with a video editing rule, wherein the first device and at least one other device of the plurality of devices are configured with two different editing rules.

In a second aspect a device capturing a video from a scene, among a plurality of devices simultaneously capturing the same scene is also disclosed. The device comprises a processor configured to:
- determine at least one ranking value representative of the matching of a captured video with respect to at least one video editing rule;
- generate a feedback in the device, in case the device is selected among the plurality of devices from a plurality of ranking values determined by at least one device of the plurality of devices.

In a third aspect a computer program for capturing a video from a scene in a first device, among a plurality of devices simultaneously capturing the same scene is also disclosed. The computer program comprises program code instructions executable by a processor for:
- determining at least one ranking value representative of the matching of a captured video with respect to at least one video editing rule;
- generating a feedback in the first device, in case the first device is selected among the plurality of devices from a plurality of ranking values determined by at least one device of the plurality of devices.

In a fourth aspect a computer program product for capturing a video from a scene in a first device, among a plurality of devices simultaneously capturing the same scene is also disclosed. The computer program product is stored on a non-transitory computer readable medium, and comprises program code instructions executable by a processor for:
- determining at least one ranking value representative of the matching of a captured video with respect to at least one video editing rule;
- generating a feedback in the first device, in case the first device is selected among the plurality of devices from a plurality of ranking values determined by at least one device of the plurality of devices.

While not explicitly described, the present embodiments may be employed in any combination or sub-combination. For example, the present principles are not limited to the described variants, and any arrangement of variants and embodiments can be used. Moreover the present principles are not limited to the described video editing rule parameters and expected values. The present principles are not further limited to the described, localization techniques, coordination methods and selection policies between devices for selecting at least one device generating a feedback. Any other video rule, parameter, expected value localization technique, coordination methods, selection policy or feedback generation technique is applicable for being comprised in the disclosed principles.

Besides, any characteristic, variant or embodiment described for the method is compatible with a device intended to process the disclosed method and with a computer-readable storage medium storing program instructions.

### 4. BRIEF DESCRIPTION OF THE DRAWINGS

In the drawings, the present principles are illustrated:
- **Figure 1** depicts a processing device for capturing a video from a scene according to a specific and non-limiting embodiment;
- **Figure 2** represents an exemplary architecture of the processing device of figure 1 according to a specific and non-limiting embodiment;
- **Figure 3** illustrates the method for capturing a video from a scene according to a specific and non-limiting embodiment;
- **Figure 4** illustrates two examples of scenes captured by a plurality of devices according to a specific and non-limiting embodiment;
- **Figure 5** illustrates an exemplary deployment of the method for capturing a video in a communal acquisition according to a specific and non-limiting embodiment.

### 5. DESCRIPTION OF EMBODIMENTS

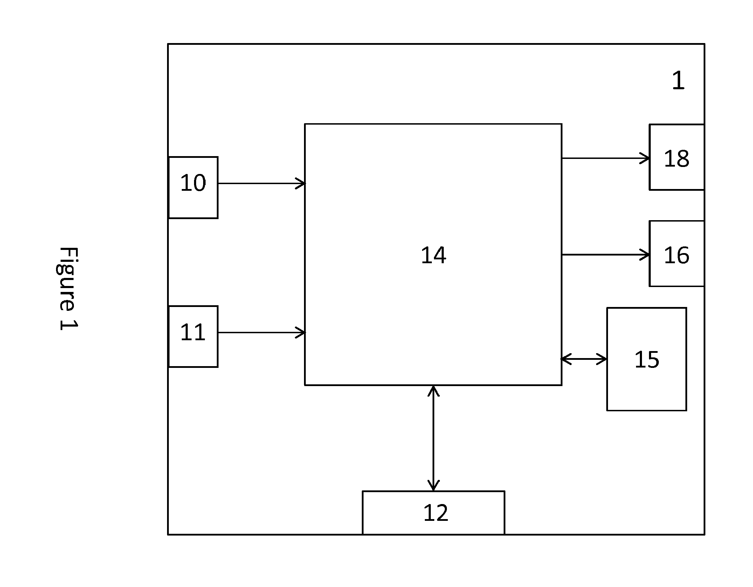

**Figure 1** depicts a processing device 1 for capturing a video from a scene in a communal acquisition. According to a specific and non-limiting embodiment of the principles, the processing device 1 comprises a camera 10 configured to capture a video as a sequence of images. According to a specific and non-limiting embodiment of the principles the camera 10 comprises a lens used to focus the light and direct it towards a semiconductor image capture device, such as for example a CCD (Charge Coupled Device) captor or a CMOS (Complementary Metal Oxide Semiconductor) captor that measures the light with a matrix of thousands or millions of minuscule photo-sensitive diodes called photo-sensitive cells.

The camera 10 is linked to a processing module 14 configured to determine at least one ranking value representative of the matching of a captured video with respect to at least one video editing rule. According to a particular embodiment the processing module 14 sends the captured video to a local display screen 16. The processing module 14 is further configured to generate a feedback in the processing device 1, in case the processing device 1 is selected among a plurality of devices capturing the same scene, from a plurality of ranking values determined by at least one device of the plurality of devices. The feedback is generated in the processing device 1 via the output 18 to a rendering means towards the user holding the processing device 1, wherein the feedback indicates the selection of the processing device 1 among the plurality of devices capturing the same scene.

According to a particular embodiment the rendering means is external to the device and the output 18 sends the feedback to an external rendering means, such as for example a connected wearable device. According to different embodiments of the principles, the rendering means, internal or external, belongs to a set comprising:
- a display screen;
- a light;
- a buzzer;
- a loudspeaker;
- a headset.
More generally any rendering means allowing to render a feedback to the user holding the processing device 1 capturing the video is compatible with the disclosed principles.

According to a particular embodiment the processing module 14 sends the captured video to the storage module 15. According to a particular embodiment, the processing module 14 also sends the determined at least one ranking value to the storage module 15. According to different embodiments of the principles, the storage module belongs to a set comprising:
- a hard disk drive;
- a SSD;
- a memory;
- a video tape;
- a writable CD-ROM;
- a writable DVD;
- a writable Blu-ray disk.
More generally any storage means allowing to store a captured video is compatible with the disclosed principles.

According to a particular embodiment of the principles, the processing device 1 further comprises a localization means 11, linked to the processing module 14, configured to localize the processing device 1 capturing the video. According to different embodiments of the principles, the localization means belongs to a set comprising:
- a GPS module generating GPS coordinates from the reception of satellite signals;
- a localization module generating localization data from the reception of signals providing from neighboring WiFi Access Points and/or cellular Base Stations;
- a localization module generating localization data from inertial sensors, measuring movements, and associated to a calibration to a fix location.
More generally any localization means allowing to localize the processing device 1 capturing the video is compatible with the disclosed principles.

According to a specific and non-limiting embodiment of the principles, the processing device 1 further comprises a network interface 12 linked to the processing module 14, configured to communicate with at least one device of a plurality of devices simultaneously capturing the same scene. According to a specific and non-limiting embodiment of the principles, the network interface 12 is further configured receive configuration data from a remote configuration server. According to different embodiments of the principles, the network interface 12 belongs to a set comprising:
- a WAN (Wide Area Network) interface such a 2G/3G/4G cellular networks, WiMax interface;
- a LAN (Local Area Network) interface such as Bluetooth, WiFi, or any kind of wireless networking interface;
- a wired interface such as Ethernet, USB, FireWire, or any kind of wired technology further enabling a data communication between the processing device 1 and at least one device of the plurality of devices capturing the same scene.
More generally any network interface allowing the processing device 1 capturing the video to communicate with at least one device of the plurality of devices simultaneously capturing the same scene, is compatible with the disclosed principles.

According to a particular embodiment the processing module 14 sends the captured video as well as the determined at least one ranking value to an external device via the network interface 12, for various purposes such as for example for remote storage, for further video editing, or for further network transmission by means of a delivery network.

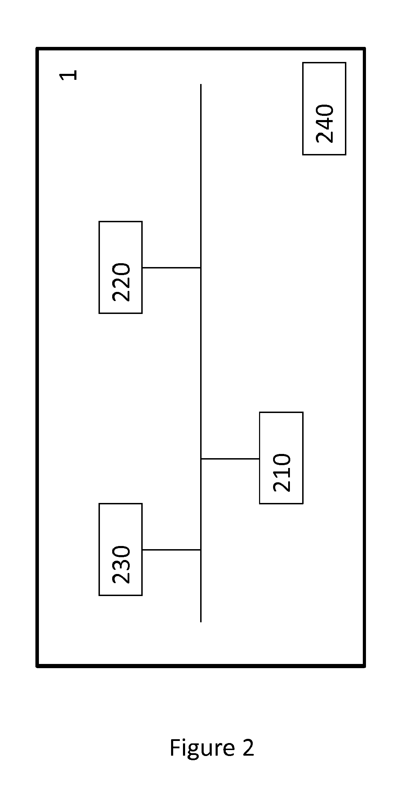

**Figure 2** represents an exemplary architecture of the processing device 1 according to a specific and non-limiting embodiment, where the processing device 1 is configured to capture a video from a scene in a communal acquisition. The processing device 1 comprises one or more processor(s) 210, which is(are), for example, a CPU, a GPU and/or a DSP (English acronym of Digital Signal Processor), along with internal memory 220 (e.g. RAM, ROM, EPROM). The memory 220 stores the frames of the captured video as well as the determined at least one ranking value. The processing device 1 comprises one or several Input/Output interface(s) 230 adapted to send to display output information and/or to allow a user to enter commands and/or data (e.g. a keyboard, a mouse, a touchpad, a webcam, a display), and/or to send / receive data over a network interface; and a power source 240 which may be external to the processing device 1.

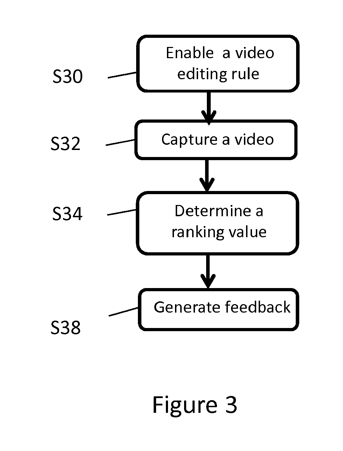

According to an exemplary and non-limiting embodiment, the processing device 1 further comprises a computer program stored in the memory 220. The computer program comprises instructions which, when executed by the processing device 1, in particular by the processor 210, make the processing device 1 carry out the processing method described with reference to figure 3. According to a variant, the computer program is stored externally to the processing device 1 on a non-transitory digital data support, e.g. on an external storage medium such as a SD Card, HDD, CD-ROM, DVD, a read-only and/or DVD drive and/or a DVD Read/Write drive, all known in the art. The processing device 1 thus comprises an interface to read the computer program. Further, the processing device 1 could access one or more Universal Serial Bus (USB)-type storage devices (e.g., "memory sticks.") through corresponding USB ports (not shown).
According to exemplary and non-limiting embodiments, the processing device 1 is a device, which belongs to a set comprising:
- a camera;
- a smartphone;
- a tablet;
- a portable game device;
- a HMD (head mounted device);
- smart glasses.

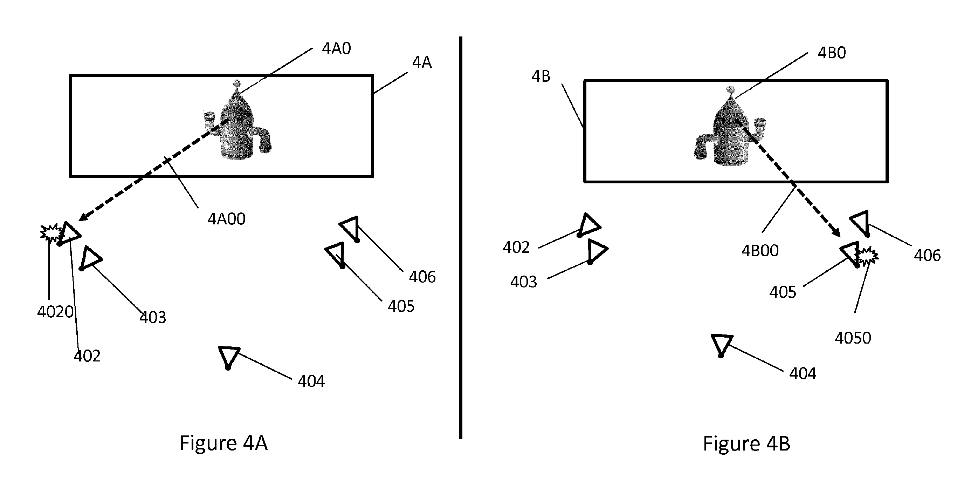

**Figure 3** and **figure 4** illustrate the method for capturing a video from a scene 4A, 4B in a first device 402, among a plurality of devices 402, 403, 404, 405, 406 capturing the same scene 4A, 4B.

### Communal video acquisition

Without any limitation and loss of generality a communal acquisition is a situation where a plurality of devices 402, 403, 404, 405, 406 acquire video content from a same event without any explicit coordination or instruction from a show director. The event is for example a public live show, a sport event, or a family event such as an anniversary, a wedding ... A communal acquisition differs from a traditional live event capture of the broadcast TV world, by the absence of any show director. Any user capturing a video from that event behaves for himself independently from the other users simultaneously capturing the same scene. Moreover, depending on the type of event, the number of people participating to the communal acquisition may be very large, up to several thousands, making it impossible to be controlled by a show director.

### Video editing rule

A movie, and by extension any video content is generally made of the juxtaposition of a plurality of video shots, where each video shot comprises a set of characteristics, such as for instance the duration, the exposure, but also the camera angle, the zoom level ... A movie director, while shooting a scene generally has precise ideas of the different expected characteristic of the video shot. Without any limitation and loss of generality video editing rules correspond to the different types of camera shots conventionally used in the domain of filmmaking. More precisely, a video editing rule is defined as a set of parameters associated with expected values allowing to characterize a level of expectation of a video shot. Without limitation, possible characteristics of a video shot comprise the shot scale, the shot angle, the shot composition and the presence of movements / action in the shot.
- Shot scales impact the size of the subject and are determined by the choice of lens and possibly the zoom level of the capturing device or by image analysis and classification techniques. Examples of shot scales are wide shot, full shot, close-up, etc.
- Shot angles are determined by different positions of the camera relative to the subject. Examples of shot angles are "eye-level", "bird's eye" or "dutch angle".
- Shot composition is determined by the number of subjects in the field of view of the capturing device, for example a single character or two characters, as well as their respective positions. Examples of shot composition are "point of view", "two shots" or "over the shoulder".
- Movements are related to camera movements such as panning or tilting as well as to camera varying settings such as a varying zooming factor. Movements are also related to movements or action inside the scene being shot.

These expected characteristics are translated into expected parameter values of a video editing rule so that a device is able to determine whether a captured video satisfies the video editing rule. The following table illustrates without limitation some examples of parameters, highlighting their variety. In this table, the first column indicates the name of the parameter, the second column indicates the type of the parameter value and third column provides a description of the parameter.

| Name | Measure | Description |
|---|---|---|
| Lens size | Numerical | Size of the lens used by the capturing device, expressed for example in millimeters |
| Zoom level | Numerical | Zoom factor as a number of magnifications. |
| Subject distance | Numerical | Distance to the subject on which the focus was done, expressed for example in meters |
| Single Face detection | Binary value | True when a single face has been detected in the captured image |
| Single Face size | Numerical, % | Ratio between the overall picture surface and the surface of the detected face, expressed as a percentage |
| Single face position | Position array | Position of the detected face, according a 3x3 grid. Horizontally: Left, Center, Right. Vertically: Top, Center, Bottom |
| Single face eye-gaze or face orientation | Binary value | True when the detected person is looking in the direction of the camera |
| Multiple face detection | Numerical | Number of faces detected. |
| Camera pan | Binary | True when a camera panning movement is applied to the capturing device |
| Camera pan direction | Direction | Indicates the direction of the camera panning movement, amongst a set of 8 directions (Up, Up-right, Right, Down-right, Down, Down-left, Left, Up-left) |
| Subject movement | Direction | Indicates the direction of the subject (person, object) movement, amongst a set of 8 directions (Up, Up-right, Right, Down-right, Down, Down-left, Left, Up-left) |
| Subject action | Action | Indicates the action of the subject, amongst a set of determined actions (walking, running, jumping, drinking, etc.) |

An elementary editing rule comprises a parameter and a corresponding expected value, wherein a parameter expected value comprises a value or a range of values together with an operator. Without limitation, the operator is for instance one among "equal", "comprised in", "greater than", "smaller than". Possible examples of elementary editing rules are listed here:
- Lens size < 30mm
- Subject distance > 5m
- Face detection = true
- Face size = 25%
- Face position = top left
- Multiple face detection > 5
- Camera zoom = Forward

Advantageously a video editing rule is a combination of several elementary editing rules. For example, combining a rule regarding the lens size, subject distance and face detection corresponds to defining a close-up shot video editing rule.

In the step S30, at least one video editing rule is enabled in the first device 402. In a first variant, the at least one video editing rule is pre-existing and pre-enabled on the first device 402. In a second variant the at least one video editing rule is installed, configured and enabled on the first device 402 by an application, that has been installed on the first device 402 by the user. In yet another variant, the at least one video editing rule is installed, configured and enabled on the first device 402 from a back-end server. Advantageously, a video editing rule configuration comprises a duration configuration, indicating how long the video editing rule remains enabled in the first device 402. A duration parameter allows more flexibility in the operation of a communal acquisition set of devices from a back-end server. More generally any method for installing, configuring and enabling a video editing rule on the first device 402 is compatible with the disclosed principles.

In the step S32, a video is captured from a scene by the first device 402 in the context of a communal acquisition. Advantageously the first device 402 further records the captured video according to the operations (zoom in, zoom out, focus, start, stop) performed by the user operating the first device 402.

### Determining a ranking value.

In the step S34, at least one ranking value representative of the matching of a captured video with respect to the at least one video editing rule is determined. The at least one ranking value is determined in the first device 402 capturing the video, by evaluating at least one captured video characteristic corresponding to the expected parameter value of the at least one editing rule. Some evaluations are obvious as they directly relate to physical parameters of the capturing device 402, such as for example the lens value or the zoom level of the camera during the video capture. Other evaluations such as assessing whether there is a single face or multiple faces in the video, are performed by applying image processing techniques such as face detection, in the capturing device 402, for example based on the method proposed in "Rapid object detection using a boosted cascade of simple features" by Viola et al. in the Proceedings of the IEEE Computer Society Conference on Computer Vision and Pattern Recognition CVPR in 2001. In another example, assessing the importance of movement or action in a scene is also performed by an image processing technique applied to the captured video, as for example described in "A survey on moving object detection and tracking in video surveillance system", by Kinjal et al. in the International Journal of Computing and Engineering (IJSCE) ISSN:2231-2307, Volume 2, Issue 3 in July 2012. More generally, any parameter and its associated expected value of an editing rule is associated with a technique to assess the matching of the expected value by the captured video, either by checking a setting of the camera during the shot capture or by applying an image processing technique to the captured video itself.

In a first embodiment, a video editing rule is a single elementary video editing rule. In a first variant the ranking value is a Boolean value (true in case the evaluated captured video characteristic meets the expectation of the elementary video editing rule, and false otherwise). For instance if the video editing rule comprises "Subject distance > 5m", and in case the focus distance measured by the first device 402 reveals that the subject is at a distance of ten meters, the ranking value is true. In a second variant of a single elementary video editing rule embodiment, the ranking value comprises a Boolean value as described in the first example, together with the evaluated characteristic value of the captured video, in case the captured video characteristic satisfies the editing rule. Embedding the evaluated characteristic value of the captured video in the determined ranking value is advantageous for further evaluating the performance of that device 402 with regards to the performance of other devices 403, 404, 405, 406 capturing the same scene.

In a second embodiment, a video editing rule comprises a plurality of elementary video editing rules. In a first variant, the ranking value is a Boolean value. The ranking value is true in case the expectations of *each of* the elementary video editing rules are met by an evaluated captured video characteristic, and false otherwise. For example, a wide shot can be defined as requiring a lens size smaller than "35mm" and a subject distance greater than three meters. If the expectation of only one of these elementary rules is met but not the second, the Boolean ranking value is false as the captured video is not satisfying a wide shot video editing rule. In a second variant of the plurality of elementary video editing rules, the ranking value is a digital value that reflects the number of elementary video editing rules that are satisfied by the captured video. For instance the ranking digital value is the ratio of the number of satisfied elementary rules over the total number of elementary video editing rules. For example, if the video editing rule is composed of five elementary video editing rules and only two of them are satisfied, then the raking value would be "0.4". Advantageously the elementary video editing rules are weighted, and the ranking value is the weighted ratio of the satisfied elementary video editing rules. Applying a weight to each of the elementary video editing rule allows to provide more flexibility in configuring a video editing rule comprising a plurality of elementary video editing rules. In any of its variant the ranking value comprises an indication on whether the video editing rule expectations are met or not. In other words, the determined ranking value indicates whether the captured video satisfies the editing rule or not. In any of its variant, one ranking value corresponds to one video editing rule. In cases a plurality of video editing rules is enabled on a device, a corresponding plurality of ranking values are determined. More generally any technique for determining a ranking value representative of the matching of a captured video with respect a video editing rule is compatible with the disclosed method. A ranking value indicating a captured video is satisfying a video editing rule is further called a *matching ranking value.*

In a third embodiment, the at least one ranking value is determined from the matching of the at least one video editing rule in case the at least one video editing rule is installed and configured. In a first variant, determining the at least one ranking value is enabled as long as the first device 402 is capturing a video. In other words, the determining of the at least one ranking value is enabled in case the first device 402 is capturing a video and disabled otherwise. In a second variant, the determining of the at least one ranking value is enabled in case the first device 402 is recording a video. In other words, the determining of the at least one ranking value is enabled when the user switches the first device 402 in record mode, and disabled when the user stops the video recording of the first device 402. In a third variant, enabling the determining of the at least one ranking value is performed by a user via the first device 402 user interface.

In a fourth embodiment, the at least one ranking value is determined from the matching of the at least one video editing rule of a video segment, wherein a video segment is defined as a set of consecutive video frames. In a first variant the video segment is a single video frame, and there is a ranking value per video frame and per video editing rule. In a second variant a video segment is a set of consecutive k frames, wherein k is an integer value. In yet another variant a video segment comprises all the frames recorded for a particular video shot, wherein a shot starts with a user starting a video record, and ends with a user stopping the video record. Advantageously, a determined ranking value of a video segment is stored along the recorded video segment as a metadata for that video segment. Storing the determined ranking values as metadata along the video is useful for further video editing purposes. This allows further video editing applications to make a direct use of these ranking values without needing to re-compute them.

### Selecting at least one device.

In the step S38, a feedback is generated in the first device 402 in case the first device 402 is selected among the plurality of devices 402, 403, 404, 405, 406 capturing the same scene, from a plurality of ranking values determined by at least one device of the plurality of devices 402, 403, 404, 405, 406. According to a preferred embodiment, the first device 402 checks whether at least one ranking value of its captured video satisfies at least one of its enabled video editing rule in any of its variant. In case at least one of its ranking value satisfies at least one of its video editing rules, the first device 402 generates a feedback according to any of the variants, described below. While generating a feedback, the first device 402 continuously monitors the captured video for further determining at least one ranking value, according to its enabled at least one video editing rule. Moreover, in case a feedback is currently generated due to a previously matching ranking value, but there is no matching ranking value anymore, the first device 402 stops generating a feedback in any of its variant.

According to another embodiment, the selection of the first device 402 further comprises coordinating with at least one other device 403, 404, 405, 406 of the plurality of devices 402, 403, 404, 405, 406, in case the at least one video editing rule is satisfied by the at least one determined ranking value in any variant and / or any embodiment described above.

### Data information

For example the first device 402 coordinates with other devices 403, 404, 405, 406 by sending a data information. In another example the first device 402 coordinates with other devices 403, 404, 405, 406 by receiving from them a data information. In a first variant, the data information sent / received by a device comprises a video editing rule identifier and the corresponding ranking value determined for the captured video. In case more than one video editing rule is enabled the data information comprises a plurality of video editing rule identifiers and a plurality of corresponding ranking values. In a second variant, the data information comprises a localization information indicating the current position of the sending device. For example the localization information is a set of GPS coordinates. In another example, the localization information provides from a localization module (internal or external to the device) describing the device position with respect to the scene. For indoor events where the GPS localization is inoperative, alternate indoor localization methods are used, for example using the inertial sensors, such as an accelerometer, to measure movements after a calibration to a central position (the entry of the indoor location for example). With such techniques, the devices are able to provide a sufficient approximation of their relative position.

### Data information transmission / reception

In a first variant the first device 402 sends a data information, in any of its variant, in broadcast mode towards the other devices 403, 404, 405, 406 capturing the same scene, or in multicast mode towards at least one other devices 403, 404, 405, 406 capturing the same scene. In a second variant the first device 402 sends the data information to each other device 403, 404, 405, 406 of the plurality of devices. In a third variant, the first device 402 sends the data information to a single other device 403, 404, 405, 406 of the plurality of devices, wherein that single other device 403, 404, 405, 406 has been dynamically and advantageously selected among the plurality of devices, and wherein that single other device 403, 404, 405, 406 is further in charge of selecting the at least one device generating a feedback. In the case of the third variant, the selection of the at least one device generating a feedback is called a centralized device selection. The centralized device selection further comprises transmitting towards the first device 402 and other devices 403, 404, 405, 406 a data information describing the at least one selected device. In yet another variant the first device 402 sends the data information to a back-end server, in charge of selecting the at least one device generating a feedback, and of transmitting towards the first device 402 and other devices 403, 404, 405, 406 a data information describing the at least one selected device.

In the case of the first and second variants, any device 402, 403, 404, 405, 406 shares the data information with any other device 402, 403, 404, 405, 406. Any device, by running a unique decision algorithm is able to select the at least one device generating a feedback. This technique, further called distributed device selection, comprises running a unique decision algorithm in different devices on a common set of data information, generating a unique and common result in the different devices.

### Device selection policy

At least one device is selected from the data information according to a selection policy. In a first variant a single device is selected among the devices reporting a matching ranking value, in any of its variant. The single device is selected by any means. For example, in case of a centralized selection, the first device reporting a matching ranking value is selected. In another example of a centralized selection a device is randomly selected among the devices reporting a matching ranking value. In another example, in case of a distributed selection, a common hash algorithm is applied on the network addresses of the devices reporting a matching ranking value, and the device with the highest hashed network address is for example selected. Advantageously, for both the centralized and the distributed device selection variants, in case the ranking value comprises a numerical value allowing to further order the matching ranking values, the device reporting the best match, for example the highest matching ranking value, is selected. Any other centralized or distributed method for selecting a single device among a set of devices reporting a matching ranking value is compatible with the disclosed method.

In a second variant a plurality of devices are selected among the devices reporting a matching ranking value for a video editing rule. For instance any device reporting a matching ranking value is selected. Advantageously a limited number of devices are selected among the devices reporting a matching ranking value for a video editing rule. For example the maximum number of selected devices is five. In another example, the maximum number of selected devices is ten. Keeping the maximum number of selected devices below for instance ten is advantageous in case a huge number of devices, for example thousands, are participating to the communal acquisition, and in case a huge part of them report a matching ranking value. Any variant described for the selection of a single device can be extended to select at least k devices among devices reporting a matching ranking value, wherein k is an integer. Advantageously in case a plurality of video editing rules are enabled on a plurality of devices, the maximum number of selected devices applies for all the enabled video editing rules. In other words a limited number of devices are selected among the devices reporting a matching ranking value for any enabled video editing rule.

In a third variant a localization criteria is included in the device selection. More precisely, in case a plurality of devices located in a same area are reporting a matching ranking value for a same video editing rule, a single device is selected among them. The device localization information is used in order to determine which devices are in the same area. A set of devices located in a same area is for instance the set of devices wherein the distance between any pair of devices of the set is below a first value. Including a localization criteria in the device selection is advantageous as it prevents the selection of multiple devices with a same editing rule and capturing the scene from a similar view point, resulting in near duplicate video shots. On the contrary selecting devices, not located in a same area allows to select only devices capturing the scene from different viewpoints. Any variant described above for a single device selection is applicable within devices reporting a matching ranking value from the same area.

In the step S38, the first device 402 checks whether it is selected in any of the variants described above. The first device 402, in case it is a selected device, generates a feedback according to any of the variant described below. While generating a feedback, the first device 402 continuously monitors the at least one matching ranking value, which matching to at least one enabled video editing rule, created the first device 402 selection. In case there is no matching any more of that at least one ranking value to at least one enabled video editing rule, the first device 402 stops generating the feedback in any of its variant.

### Feedback generation towards the scene

Figure 4 illustrates the capture of a scene 4A, 4B at two different times T_{A} and T_{B}. According to a particular embodiment, the scene 4A, 4B comprises at least one autonomous entity, and the generating of a feedback comprises switching on a light 4020, 4050 on the selected device 402, 405, wherein the light 4020, 4050 is visible from the scene 4A, 4B indicating to the autonomous entity to focus towards the selected device 402, 405. In a first variant an autonomous entity is a person, and the visible light is advantageous as it represents an indication towards the person being shot to focus attention to a device that satisfies at least one video editing rule. Focusing the attention of the person being shot to that device, increases the video quality being captured by that device. Indeed, the person being shot in a communal acquisition has no way to know which device currently capturing a video, has a good match with a video editing rule. This technique allows the person being shot to focus attention to those devices, increasing therefore the quality of the captured video.

In a second variant an autonomous entity 4A0, 4B0 is for example an autonomous robot or a drone, moving around in a scene in a context of a communal acquisition. At T_{A,} the scene 4A, comprising the autonomous entity 4A0 is captured by a plurality of devices 402, 403, 404, 405, 406 in the context of a communal acquisition. Each device determines a ranking value and coordinates with each other so as to select the first device 402. A feedback is generated by the selected first device 402 in the form of a visible light 4020 towards the scene 4A, so as to attract the attention 4A00 of the autonomous device 4A0. Similarly at T_{B}, the scene 4B, comprising the autonomous entity 4B0 is captured by the same plurality of devices 402, 403, 404, 405, 406 in the context of a communal acquisition, and another device 405 is selected from the matching of at least one ranking value to the at least one video editing rule. The change of the selected device may be due to a change in the video setting of the previous selected device 402, because for instance the user operating the first device 402 decided to zoom out. A feedback in the form of a visible light 4050 towards the scene 4A is generated by the new selected device 405, so as to attract the attention 4B00 of the autonomous entity 4B0. Focusing the attention of an autonomous entity 4A0, 4B0 may take various forms. In a first example the autonomous entity 4A0, 4B0 comprises a pair of lights representing human eyes and focusing attention 4A00, 4B00 comprises directing the synthetic eyes towards the visible light 4020, 4050. In a second example, the autonomous entity 4A0, 4B0 is moving around in the scene, and focusing attention comprises moving in the direction of the visible light 4020, 4050. More generally any type of autonomous entity 4A0, 4B0 and attention focus is compatible with the disclosed method.

### Feedback generation towards the user of the selected device

According to another embodiment, a live event, such as a public show or a sport event is captured by a plurality of devices 402, 403, 404, 405, 406 in the context of a communal acquisition without the support of any show director. According to this embodiment, the communal acquisition further comprises a live transmission of some of the video captures, via a delivery network towards end users. The disclosed method allows to retransmit an event being captured in the context of a communal acquisition without any show director. The delivery network is for instance Internet, and the plurality of capturing devices 402, 403, 404, 405, 406 are connected to a network both for coordinating among themselves as previously described, and for transmitting their captured video. As the number of capturing devices 402, 403, 404, 405, 406 may be very large, the disclosed method allows to select a subset of devices from the matching of their captured video with respect video editing rules. Generating a feedback from a selected device 402, 405 towards the user operating the device currently selected is advantageous as it allows to indicate to a user currently shooting a scene that his video capture is selected for re-transmission, and that he should not change any of the video settings, or that he should not move the device. Indeed, if a selected device 402, 405 is further chosen for feeding the delivery network with the currently captured video, a change in the video setting or an unexpected movement of the camera would be very damageable to the quality of the video event re-transmission. For example generating a feedback comprises rendering an information item on the selected device 402, 405 towards the user of the selected device, wherein the information item is one among:
- a graphical information item displayed on a screen of the selected device;
- a visible light on the selected device;
- an audio signal;
- a buzzer signal
- an haptic feedback.

Advantageously, an information item, such as for example a buzzer signal is rendered on a wearable connected device, such as for example a smartwatch. Any wearable or connected device able to render an information item for indicating to the user that his capturing device is selected is compatible with the disclosed method.

According to yet another embodiment, the first device 402 capturing the video and the plurality of other devices 403, 404, 405, 406 are configured with a video editing rule wherein the first device 402 and at least one other device 403, 404, 405, 406 of the plurality of devices are configured with a different editing rules. This results in the availability of simultaneously captured video matching different video editing rules, such as for example "close-up" and "wide shot". This is advantageous as it allows a variety of video shots with different characteristics from the communal acquisition. The communal acquisition material obtained from a plurality of selected devices and according to the disclosed method, comprises an interesting variety of shots that can be used by different types of applications such as offline video editing, live delivery, etc.

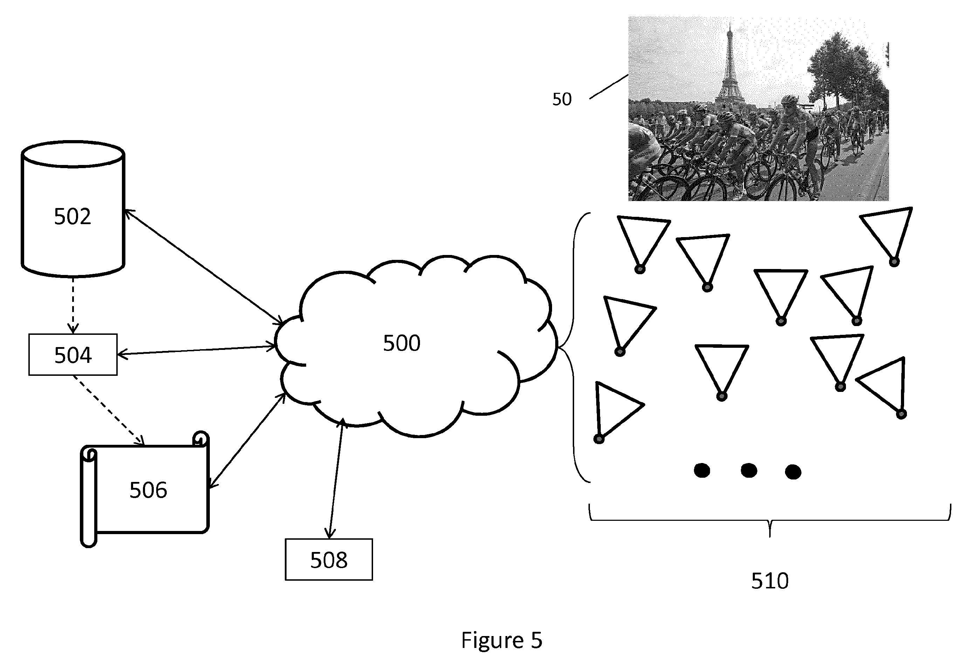

**Figure 5** represents an exemplary deployment of the disclosure in order to perform a communal acquisition according to a specific and non-limiting embodiment. For example in a public event 50 like a cycling race such as the "tour de France", every day thousands of devices 510 are capturing small fractions of the overall event 50. The plurality of devices 510 are operated by users attending the event. Through their respective network interfaces and a global communication network 500 such as a 4^{th} generation mobile communication network, these devices 500 upload the captured videos to a content database 502, as well as the matching ranking value corresponding to video editing rules previously obtained. An automated video editor device 504 analyses the content database 502 and particularly the ranking value representative of the matching of a captured video with respect to the video editing rules. According to the plurality of ranking values, the video editor device selects the corresponding captured videos as described above and assembles them to generate a unique communal video summary 506 of the event. This process can either be performed once the event is terminated or in live, during the event. Individual persons can then access this video through standard computing devices 508 and visualize the communal video summary of the event. Determining the ranking value in the capturing device itself is advantageous in large scale communal acquisition events as it relaxes the processing requirements on the device 504, collecting the captured shots and in charge of the final video edition. Collecting all the captured video shots and determining the matching of all the captured videos with at least one video editing rule, in a single device 504, for building the final video would require a huge amount of processing capabilities to determine the matching of all the video segments, leading to intractable implementations for large scale events, involving a large amount of capturing devices. Moreover, with the principles of the disclosure, only the matching captured video segments are transferred onto the communication network therefore reducing the required network resources compared to state of art approaches.

## Claims

1. A method for capturing a video from a scene (4A, 4B) in a first device (1, 402), among a plurality of devices (1, 402, 403, 404, 405, 406) simultaneously capturing said scene (4A,4B), said method, performed in said first device (1, 402), comprising:
- determining (S34) at least one ranking value representative of the matching of a captured video with respect to at least one video editing rule;
- generating (S38) a feedback in said first device (1, 402), in case said first device (1, 402) is selected among said plurality of devices (1, 402, 403, 404, 405, 406) from a plurality of ranking values determined by at least one device of said plurality of devices (1, 402, 403, 404, 405, 406).

2. The method according to claim 1, wherein said determining (S34) at least one ranking value is applied on a segment of said captured video.

3. The method according to claim 2, further comprising storing said at least one ranking value for said video segment as a metadata related to said video segment.

4. The method according to any of claims 1 to 3, wherein said scene (4A, 4B) comprises at least one autonomous entity (4A0, 4B0), said generating (S38) a feedback comprises switching on a light (4020) on said first device (1, 402), wherein said light (4020) is visible from the scene (4A, 4B), indicating to said autonomous entity (4A0, 4B0), to focus (4A00) to said first device (1, 402).

5. The method according to any of claims 1 to 3, wherein said generating (S38) a feedback comprises rendering an information item on said first device (1, 402) towards the user of said first device (1, 402), wherein said information item is one among:
- a graphical information item displayed on a screen of said first device (1,402);
- a visible light on said first device (1, 402);
- an audio signal;
- a buzzer signal.

6. The method according to any of claims 1 to 5, wherein said first device (1, 402) is selected based on said at least one ranking value of said first device (1, 402), and by coordinating of said first device (1, 402) with at least one other device (403, 404, 405, 406) of said plurality of devices (1, 402, 403, 404, 405, 406).

7. The method according to claim 6, wherein said coordinating of said first device (1, 402) with at least one other device (403, 404, 405, 406) of said plurality of devices (1, 402, 403, 404, 405, 406) further comprises sending said at least one ranking value of said first device (1, 402).

8. The method according to claim 7, wherein said coordinating of said first device (1, 402) with at least one other device (403, 404, 405, 406) of said plurality of devices (1, 402, 403, 404, 405, 406) further comprises sending at least one identifier of said at least one video editing rule of said first device (1, 402).

9. The method according to claim 7 or 8, wherein said coordinating of said first device (1, 402) with at least one other device (403, 404, 405, 406) of said plurality of devices (1, 402, 403, 404, 405, 406) further comprises sending a localization information of said first device (1, 402).

10. The method according to any of claims 7 to 9, wherein, in case said at least one video editing rule is satisfied by more than one device in a same area, said first device (1, 402) is selected as the single selected device within said same area.

11. The method according to any of claims 1 to 10, wherein the number of selected devices is smaller than a first value.

12. The method according to any of claims 1 to 11, wherein said plurality of devices (1, 402, 403, 404, 405, 406) are configured with a video editing rule, wherein said first device (1, 402) and at least one other device (403, 404, 405, 406) of said plurality of devices (1, 402, 403, 404, 405, 406) are configured with two different editing rules.

13. A device (1, 402) capturing a video from a scene (4A, 4B), among a plurality of devices (1, 402, 403, 404, 405, 406) simultaneously capturing said scene (4A,4B), said device comprising a processor (210) configured to:
- determine at least one ranking value representative of the matching of a captured video with respect to at least one video editing rule;
- generate a feedback in said device (1, 402), in case said device (1, 402) is selected among said plurality of devices (1, 402, 403, 404, 405, 406) from a plurality of ranking values determined by at least one device of said plurality of devices (1, 402, 403, 404, 405, 406).

14. A computer program for capturing a video from a scene (4A, 4B), in a first device (1, 402), among a plurality of devices (1, 402, 403, 404, 405, 406) simultaneously capturing said scene (4A,4B), said computer program comprising program code instructions executable by a processor for:
- determining (S34) at least one ranking value representative of the matching of a captured video with respect to at least one video editing rule;
- generating (S38) a feedback in said first device (1, 402), in case said first device (1, 402) is selected among said plurality of devices (1, 402, 403, 404, 405, 406) from a plurality of ranking values determined by at least one device of said plurality of devices (1, 402, 403, 404, 405, 406).

15. The device (1, 402), according to claim 13 wherein said device (1, 402) belongs to a set comprising:
- a camera;
- a smartphone;
- a tablet;
- a portable game device;
- a head mounted device;
- smart glasses.
